# EUROPÄISCHE PATENTSCHRIFT

(11) **EP 1 459 266 B1**
(45) Veröffentlichungstag und Bekanntmachung des Hinweises auf die Patenterteilung: **16.03.2011**
(21) Anmeldenummer: 02795238.1
(22) Anmeldetag: 19.12.2002
(51) Int. Cl.: G07D 7/00

(54) **VERFAHREN ZUR AUTHENTIZITÄTSSICHERUNG VON DOKUMENTEN**
METHOD FOR GUARANTEEING THE AUTHENTICITY OF DOCUMENTS
PROCÉDÉ POUR PROTÉGER L'AUTHENTICITÉ DE DOCUMENTS

(30) Priorität: 19.12.2001 DE 10162537
(43) Veröffentlichungstag der Anmeldung: 22.09.2004
(73) Patentinhaber: Actilor GmbH, 06237 Leuna (DE)
(72) Erfinder: Actilor GmbH, 06237 Leuna (DE)
(74) Vertreter: Tiesmeyer, Johannes
(86) Internationale Anmeldenummer: PCT/EP2002/014583
(87) Internationale Veröffentlichungsnummer: WO 2003/052701

(56) Entgegenhaltungen:
- EP-A- 0 940 945
- WO-A-01/18754
- WO-A-98/57299
- WO-A-02/083423
- GB-A- 2 180 564
- GB-A- 2 324 065
- US-A- 4 186 943
- US-A- 5 354 097
- US-A- 5 388 862
- US-A- 5 592 561
- US-A- 5 974 150
- US-A- 6 111 953
- US-A1- 2001 022 848
- US-A1- 2001 046 294

## Beschreibung

Die Erfindung betrifft ein Verfahren zur Authentizitätssicherung von Dokumenten, insbesondere Banknoten, Wertpapieren, Ausweisen, Eintrittskarten, Kreditkarten, Chipkarten oder dgl., die jeweils ein Substrat mit individuellen, optisch bzw. ortsaufgelöst detektierbaren Substratmerkmalen aufweisen und mit Dokumentendaten versehen sind.

Trotz intensiver Bemühungen, Sicherheitsdokumente, insbesondere Banknoten, so zu gestalten, dass täuschende Nachahmungen möglichst ausgeschlossen sind, gelingt es Fälschern dennoch immer wieder, gefälschte Dokumente in den Verkehr zu bringen. Es sind Fälle von Banknotenfälschungen bekannt geworden, in denen nicht nur das Druckmuster von Banknoten nahezu exakt nachgebildet wurde, sondern auch das für die Banknoten verwendete Substrat, also das spezielle Sicherheitspapier. Solche Beispiele haben gezeigt, dass Geldfälscher dazu in der Lage und auch dazu bereit sind, einen großen Aufwand zu treiben, um ihre Fälschungsprodukte möglichst authentisch wirken zu lassen.

Im Zuge der Bemühungen, Dokumente möglichst fälschungssicher zu machen, sind bereits Überlegungen angestellt worden, das Substratmaterial für Sicherheitsdokumente so zu präparieren, dass die Authentizität eines Dokumentes aus einem solchen Substratmaterial mittels spezieller, aber einfach durchzuführender Tests überprüft werden kann. Ein Beispiel solcher Überlegungen ist in der US 6 054 021 dargelegt. Gemäß der US 6 054 021 werden der Papierrohmasse bei der Substratherstellung für ein Sicherheitspapier fluoreszierende Zellulosefasern beigemischt, die sich in der Papiermasse stochastisch verteilen. Ein aus einer so präparierten Papiermasse hergestelltes Dokument weist somit in seinem Substrat eine zufällige Verteilung fluoreszierender Zellulosefasern auf, die sich unter Fluoreszenzbedingungen optisch konstrastreich von ihrer Umgebung absetzen. Zur Authentizitätsprüfung werden solche Dokumente einer die Fluoreszenz der Fasern anregenden Strahlung, z.B. UV-Strahlung, ausgesetzt. Treten dabei keine fluoreszierenden Fasern in Erscheinung, so wird das Dokument als gefälscht qualifiziert.

In der US5974150 wird ein Verfahren zur Authentizitätssicherung von Dokumenten dargelegt, die jeweils ein Substrat mit für jedes einzelne Dokument individuellen Substratmerkmalen in Form von fluoreszierenden Fasern aufweisen und mit Dokumentendaten versehen sind. Vor seiner Herausgabe wird ein jeweiliges Dokument insgesamt oder teilweise ortsaufgelöst analysiert und dabei ein Datensatz mit Informationen über die Anordnung und Ausprägung individueller Substratmerkmale des Dokumentes erzeugt. Die Daten dieses Datensatzes oder daraus abgeleitete Daten zusammen mit oder in Zuordnung zu Dokumentendaten des betreffenden Dokumentes werden in einer Datenbank gespeichert, um sie für spätere Authentifizierungsanfragen bereitzuhalten. In der US2001046294 sowie der GB2324065 werden ähnliche Verfahren beschrieben.

Sollte es Fälschern jedoch gelingen, exakte Kopien eines herausgegebenen Dokumentes anzufertigen, so können diese Kopien den Authentizitätsprüfungsvorgang täuschen. Der Erfindung liegt die Aufgabe zugrunde, ein verbessertes Verfahren zur Authentizitätssicherung von Dokumenten anzugeben. Diese Aufgabe wird von einem Verfahren gemäß Anspruch 1 gelöst.

Die hier betrachteten individuellen Substratmerkmale sind insbesondere Strukturdetails des vorzugsweise zu einem Blatt präparierten Substrats, die eine stochastische oder quasi-stochastische Formgestaltung oder Vertei-lung in oder auf dem Substrat haben. Dabei kann es sich beispielsweise um spezielle Strukturmerkmale, wie etwa Faserstrukturmerkmale, Gefügestrukturmerkmale, Fremdkörpereinschlussmerkmale oder dgl. handeln, die ihr durch ortsselektive Analyse detektierbares Erscheinungsbild auch bei strapaziöser Behandlung des betreffenden Dokumentes im späteren Gebrauch nicht wesentlich ändern, da bei einer späteren Authentizitätsprüfung ein betreffendes Dokument (zumindest auch) aufgrund solcher individueller Substratmerkmale wiedererkennbar sein soll.

Als Substratmaterialien kommen insbesondere Papier, Karton, Kunststoff, Textil, Metall, etc. in Frage.

Die ortsaufgelöste Analyse des Dokumentes erfolgt vorzugsweise auf optischem Wege mit einem bildgebenden Verfahren, wobei die dabei erhaltenen Daten Bildinformationen über den betrachteten Bereich des Dokumentes enthalten. Diese Bilddaten oder/und daraus im Wege der Datenkompression, der Codierung oder nach einem vorbestimmten sonstigen Datenverarbeitungsprozess abgeleitete Daten werden in der Datenbank für Authentifizierungszwecke gespeichert. In besonders bevorzugter Weise besteht die ortsaufgelöste Analyse darin, dass das jeweilige Dokument oder ein bestimmter Bereich davon mittels einer Scannereinrichtung optisch gescannt oder mittels einer digitalen Kamera fotografiert oder ggf. videografiert wird.

Gemäß einer Variante des Verfahrens nach der Erfindung werden beide Seiten eines Dokumentes ganz oder teilweise optisch erfasst, um Daten zur Beschreibung der Substratmerkmale zu erhalten. Bei hinreichender Dicke eines Dokumentes kann es ferner vorgesehen sein, auch oder ausschließlich den Umfangsbereich bzw. den Kantenbereich in die optische Erfassung einzubeziehen.

Üblicherweise sind Dokumentendaten auf dem jeweiligen Substrat in Form von grafischen Mustern, Markierungen, Bildelementen oder/und Beschriftungen etc. vorgesehen. Dokumentendaten können jedoch bei Dokumenten mit betreffenden Speichermedien auch oder alternativ in Speicherchips, Magnetstreifen etc. gespeichert sein.

Allgemeine Dokumentendaten, wie Wertangaben, Druckbildelemente, Dokumentenherstellerhinweise oder dgl. sind bei einer größeren Anzahl von Dokumenten einer Dokumentenart normalerweise gleich ausgeführt. Individuelle Dokumentendaten, wie Seriennummern, Individualmarkierungen usw., sind bei allen Dokumenten einer Dokumentenart normalerweise unterschiedlich und eignen sich daher als Zuordnungskriterium bei der Speicherung der bei der ortsselektiven Analyse eines Dokumentes erhaltenen Daten (Substratmerkmalsinformationen).

Durch die elektronische Speicherung "eines Bildes" der für jedes Dokument individuellen, weil unter Quasi-Zufallsbedingungen ausgebildeten bzw. verteilten Substrat-Strukturdetails in Zuordnung zu individuellen Dokumentendaten, die das Dokument als solches kennzeichnen, wird somit vor Herausgabe des Dokumentes vom Dokumentenhersteller oder ggf. einer gesonderten Autorisierungsstelle ein für jedes Dokument individueller Vergleichsdatensatz angelegt, der für etwaige spätere Vergleichsanfragen betreffend die Authentizität eines herausgegebenen Dokumentes bereitgehalten wird.

Vorzugsweise wird das erfindungsgemäße Verfahren bei Dokumenten angewandt, bei denen die Strukturdetails durch optisch markante kleine Partikel des Substrates oder durch kleine Fremdeinschlüsse in dem Substratgrundmaterial gebildet sind. Diese Partikel können z.B. vor dem optischen Hintergrund der Substratgrundmasse kontrastreich darstellbare, vorzugsweise in die Substratmasse einbezogene photochrome, fluoreszierende oder sonstige spezifische optische Eigenschaften aufweisende Fasern sein. Wie bereits erwähnt, sind Dokumentensubstrate mit fluoreszierenden Fasern bekannt, beispielsweise aus der US 6 054 021.

Ganz allgemein sollte das Verfahren nach der Erfindung sich auf solche Dokumente beziehen, bei denen die optisch markanten Partikel gegenüber ihrer Substratumgebung spezifische optische Eigenschaften, insbesondere eine andere Färbung, wellenlängenselektive Absorption, Fluoreszens, Phosphoreszens, photochrome Eigenschaften, polarisationssensitive Eigenschaften oder/und vom Betrachtungswinkel abhängige Eigenschaften aufweisen.

Wie bereits erwähnt, sind viele Arten von Dokumenten, etwa Banknoten, durch individualisierende und auf dem Dokument vorgesehene Dokumentendaten z.B. durch laufende Seriennummern gekennzeichnet. Bei der Authentizitätssicherung insbesondere solcher Dokumente sollte das Verfahren nach der vorliegenden Erfindung in der Weise durchgeführt werden, dass eine Speicherung solcher individueller Dokumentendaten in Kombination mit den Substratmerkmal-Bilddaten oder ggf. davon abgeleiteter Daten stattfindet. Bei der Bilddatenaufnahme kann hierzu eine simultane optische Erfassung der auf dem betreffenden Dokumentenexemplar vorgesehenen Dokumentendaten und der Strukturdetail-Bilddaten beispielsweise durch gemeinsames Scannen durchgeführt werden. Der erhaltene Datensatz sollte dann eine eindeutige räumliche Zuordnung von individuellen Dokumentendaten und individuellen Substratmerkmalen enthalten.

Die Dokumentendaten können z.B. mit einer fluoreszierenden Tinte auf dem jeweiligen Substrat aufgedruckt sein. Vorausgesetzt, dass auch die zu erfassenden Substrat-Strukturdetails, beispielsweise statistisch verteilte Strukturfasern, fluoreszieren, so kann die gleichzeitige bildhafte Erfassung der individuellen Substrat-Strukturmerkmale und der individuellen Dokumentendaten unter Fluoreszenzbedingungen durchgeführt werden. Bevorzugt sollten zumindest einige der betreffenden Substratmerkmale, insbesondere in die Substratgrundmasse eingebettete Fremdeinschlüsse, oder/und etwaige Markierungen, Druckmuster oder Dokumentendatenabdrucke auf dem Substrat photochromes Material, vorzugsweise biologisches Material, wie z.B. chemisch oder gentechnisch modifiziertes Bakteriorhodopsin oder mehrere Bakteriorhodopsine, enthalten, die unterschiedliche Eigenschaften aufweisen, z. B. unterschiedliche Absorptionsmaxima, unterschiedliche Fluoreszenzeigenschaften, unterschiedliche Lichtempfindlichkeiten oder unterschiedliche Kinetiken der Rückkehr zum Anfangszustand. Die spezifischen optischen Eigenschaften des photochromen Materials können bei der Authentizitätssicherung und Authentizitätsprüfung von Dokumenten genutzt werden.

Im Falle von Bakteriorhodopsin kann z.B. eine erste Bilddatenerfassung bei Beleuchtung des Dokumentes mit gelbem Licht und danach eine zweite Bilddatenerfassung bei Beleuchtung des Dokumentes mit blauem Licht durchgeführt werden. Bei Subtraktion der Daten der ersten Bilddatenerfassung von den Daten der zweiten Bilddatenerfassung (oder umgekehrt) ergeben sich Bilddaten, die z. B. die Stellen des Dokumentes hervorheben, welche Bakteriorhodopsin enthalten.

Wenngleich eine bevorzugte Ausführung des Verfahrens die Authentizitätssicherung von solchen Dokumenten vorsieht, bei denen die optisch markanten Partikel in die Substratgrundmasse einbezogen sind, so kann es bei einer anderen Anwendungsvariante des erfindungsgemäßen Verfahrens vorgesehen sein, dass Dokumente zu sichern sind, bei denen ein Material mit spezifischen, ortsaufgelöst bzw. optisch detektierbaren Strukturdetails auf das Dokumentensubstrat aufgetragen ist. Bei diesem aufgetragenen Material kann es sich z.B. um eine Farbe, Tinte bzw. einen Lack mit markanten Partikeln, z.B. Glimmerplättchen oder dgl. handeln. Beim Aufdrucken einer solchen Farbe, Tinte oder Lackflüssigkeit auf ein betreffendes Dokumentensubstrat entsteht dann eine zufällige Verteilung dieser Partikel auf einer definierten Fläche, wobei diese Partikel im Sinne der vorliegenden Anmeldung Substratmerkmale darstellen, welche nach dem Verfahren der vorliegenden Erfindung ortsaufgelöst zu erfassen sind.

Es gibt Dokumentenarten, bei denen eine jedes einzelne Dokumentenexemplar individualisierende Kennzeichnung im Sinne einer Durchnummerierung nicht erforderlich ist, beispielsweise ein Satz von nicht mit Seriennummern versehenen Eintrittskarten für eine Veranstaltung. Hinsichtlich der Authentizitätssicherung im Rahmen des Verfahrens nach der Erfindung kann es ausreichen, dass von jedem Dokumentenexemplar ein Bild der individuellen Strukturdetails unter dem Vermerk, dass die Bilddaten einer bestimmten Dokumentenart zugeordnet sind, abgespeichert werden. Es findet somit auch in einem solchen Fall eine Abspeicherung der Bilddaten in einer Datenbank in Zuordnung zu Dokumentendaten statt, wobei der Vermerk einer betreffenden Dokumentenart solchen Dokumentendaten entspricht, die in diesem Spezialfall für alle Dokumentenexemplare gleich sind und nicht unbedingt auf dem Dokument aufgedruckt sein müssen.

Zur Authentizitätsprüfung eines Dokumentes wird das Dokument mittels einer Prüfeinrichtung ortsaufgelöst analysiert, um einen Datensatz mit Informationen über die Anordnung oder/und Ausprägung individueller Substratmerkmale des Dokumentes zu erzeugen. Die ortsaufgelöste Analyse erfolgt vorzugsweise auf optischem Wege mit einem bildgebenden Verfahren, z.B. durch Scannen, wobei die dabei erhaltenen Daten Bildinformationen über den betrachteten Bereich des Dokumentes enthalten. Die an dem zu prüfenden Dokument ermittelten Bilddaten oder ggf. davon abgeleitete Daten werden dann mit den in der Datendank archivierten Daten verglichen. Wird dabei festgestellt, dass zu dem Dokument ein Datensatz mit entsprechenden Authentifizierungsdaten in der Datenbank existiert, so kann von der Datenbank aus eine die Echtheit des Dokumentes bestätigende Rückmeldung an die prüfende Stelle abgegeben werden. Liegt keine im Rahmen einer etwaigen Fehlertoleranz hinreichende Übereinstimmung der miteinander zu vergleichenden Daten vor, so ist dies ein Hinweis darauf, dass das geprüfte Dokument gefälscht ist.

Die digitale Speicherung der Bilddaten in der Archivierungsdatenbank kann auf herkömmliche Weise mittels einer elektronischen Datenverarbeitungsanlage durchgeführt werden, die der spezifischen Aufgabenstellung entsprechend programmiert ist. Die bei der Bildaufnahme gewonnenen Daten sollten aus Gründen der Speicherplatzökonomie einer Datenkomprimierung unterzogen werden, wobei dann die komprimierten Daten in Zuordnung zu den ggf. ebenfalls komprimierten Dokumentendaten gespeichert werden. Geeignete Datenkomprimierungsprogramme sind verfügbar und zählen zum Stand der Technik, so dass sie hier nicht näher erläutert werden müssen.

Die Datenbank mit den gespeicherten Bilddaten der Substratmerkmale und den zugeordneten Dokumentendaten wird gemäß einer Verfahrensweise nach der Erfindung nur von einer oder von wenigen dazu ermächtigten Authentifizierungsstellen verwaltet und unter Verschluss gehalten.

Der Datenaustausch, also die Übermittlung der Daten von einem betreffenden Prüfgerät, welches zur Erfassung der Bilddaten von einem Dokument eingerichtet ist, zu der die Archivdatenbank kontrollierenden Datenverarbeitungsanlage kann z.B. online per Datenfernübertragung stattfinden, ebenso wie die Rückmeldung von der den Datenvergleich ausführenden Datenverarbeitungsanlage. Die Datenfernübertragung kann per Funk, etwa Mobilfunk oder leitungsgebunden erfolgen.

Denkbar ist auch eine Situation, in der ein Datenaustausch zwischen einer Dokumentenprüfstelle und der Authentifizierungsstelle vermittels der Übergabe von Datenträgern z.B. CD-Roms oder DVD-Roms stattfindet. Unter Beachtung der gebotenen Sicherheitsmaßnahmen kann der Datenaustausch beispielsweise auch über das Internet abgewickelt werden.

Gemäß einer weiteren Verfahrensvariante nach der Erfindung wird zumindest auf einen Teil der Bilddaten eines jeweiligen Dokumentes oder auf daraus abgeleitete Daten ein Algorithmus zur Berechnung wenigstens eines dem Dokumentenexemplar zugeordneten Prüfcodewertes angewendet und dann das Dokumentenexemplar mit einer den Prüfcodewert repräsentierenden Markierung versehen, bevor das Dokument herausgegeben wird.

Für die Berechnung des Prüfcodewertes wird bevorzugt nur ein Teil des aufgenommenen Datensatzes verwendet, z.B. ein einer bestimmten Bildfläche auf dem Dokument entsprechender Teil.

Bei der späteren Echtheitsprüfung eines mit Prüfcodewert präparierten Dokumentes wird dieses mit einem Prüfgerät bildhaft erfasst, um einen entsprechenden Datensatz zu erzeugen, der dann unter Heranziehung des speziellen Prüfcode-Berechnungsalgorithmus verarbeitet wird. Stimmt der dabei ermittelte Prüfcodewert mit dem auf dem Dokument vorgefundenen Prüfcodewert überein, so ist dies als ein Zeichen für die Authentizität des Dokumentes zu werten. Stimmt der bei der Dokumentenprüfung ermittelte Prüfcodewert nicht mit dem in Form einer Markierung auf dem Dokument vorgefundenen Prüfcodewert überein, so ist dies ein Hinweis darauf, dass das geprüfte Dokument gefälscht ist.

Der Prüfcodewert-Berechnungsalgorithmus, also der Verschlüsselungsmechanismus, ist so zu sichern, dass er Unbefugten nicht zugänglich ist und somit nicht von potentiellen Fälschern verifiziert werden kann.

Prüfeinrichtungen oder deren bilderfassende Komponenten können z.B. in Kassenautomaten integriert sein, um Banknoten, die dem Kassenautomaten zugeführt werden, auf Echtheit zu prüfen.

Die Erfindung wird im Folgenden unter Bezugnahme auf die Figuren näher erläutert.
- Fig. 1: zeigt ein fiktives Dokument, z.B. eine Banknote, als ein Beispiel für ein individuelles Exemplar einer großen Anzahl von Dokumenten, deren Authentizität nach dem Verfahren der vorliegenden Erfindung mit einem hohen Maß an Sicherheit gewährleistet werden kann.
- Fig. 2: stellt in schematischer Darstellung ein System aus einer zentralen Einrichtung zur Authentizitätssicherung von Dokumenten und aus dezentralen Prüfeinrichtungen zur Prüfung betreffender Dokumente dar.
- Fig. 3a und Fig. 3b: zeigen das Dokument aus Fig. 1 im Zustand vor und nach einer Authentizitätsprüfung.

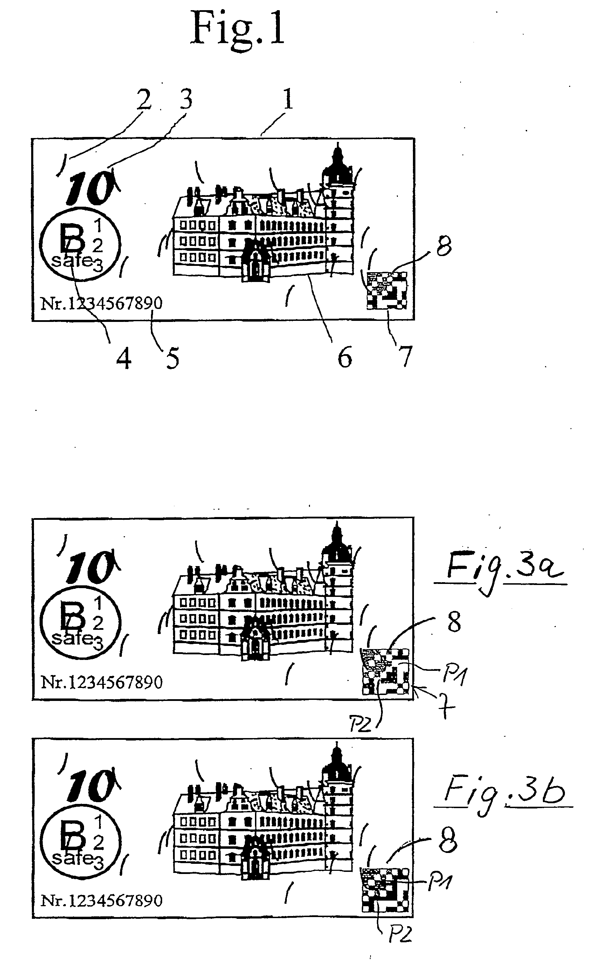

Das Dokument 1 gemäß Fig. 1 hat ein Papiersubstrat, in welches in willkürlicher bzw. zufälliger Verteilung optisch gegenüber der Substratgrundmasse markante kleine Fasern 2 einbezogen sind. Im Beispielsfall handelt es sich um fluoreszierende Fasern, deren Fluoreszenz durch Bestrahlung mit einem UV-Anregungslicht angeregt werden kann. Die Fasern 2 wurden der Papiergrundmasse zugegeben, so dass sie sich bei der Weiterverarbeitung der Papiergrundmasse zu dem blattförmigen Substrat stochastisch verteilen konnten. Somit wird erreicht, dass jedes auf diese Weise hergestellte Dokumentenexemplar 1 eine zufällige und individuelle Verteilung der optisch markanten Fasern 2 im. Substrat aufweist. Vorzugsweise liegen die Fasern so in dem Dokument, dass sie auf beiden Seiten des Dokumentes sichtbar gemacht werden können bzw. sichtbar sind.

Das Dokument gemäß Fig. 1 weist eine aufgedruckte Wertkennzeichnung bei 3 auf. Mit 4 ist ein Authentifizierbarkeitshinweis, also ein Hinweis darauf, dass das Dokument nach dem vorliegenden Verfahren authentifizierbar ist, und eine Herstelleridentifikationskennzeichnung auf dem Substrat bezeichnet, anhand welcher der autorisierte Hersteller des Dokumentes bzw. die zur Authentifizierung des Dokumentes berechtigte Stelle identifiziert werden kann.

Bei 5 ist in Fig. 1 eine individuelle Seriennummer des Dokumentes dargestellt, die auf dem Substrat 1 aufgedruckt ist.

Bei 6 ist in Fig. 1 ein Druckbild gezeigt, welches bei allen Exemplaren des betrachteten Dokumententyps gleich ist.

Mit 7 ist in Fig. 1 ein Authentifizierungsänderungsfeld dargestellt, auf das im Folgenden noch eingegangen wird.

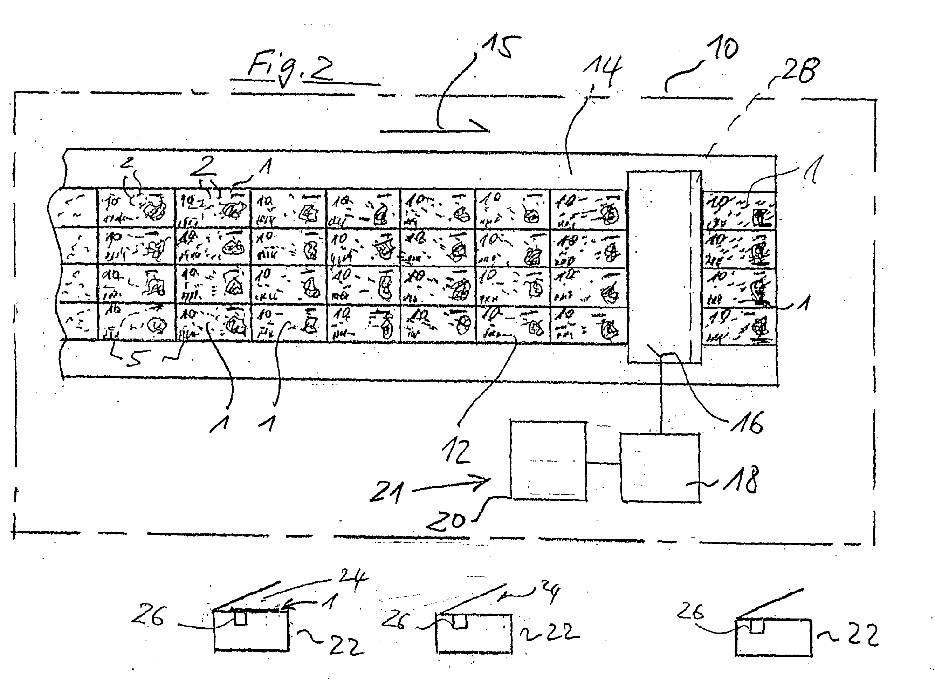

In der schematischen Darstellung gemäß Fig. 2 symbolisiert die Umrahmung 10 einen geschützten Bereich, in dem Banknoten 1 gemäß Fig. 1 von einem autorisierten Hersteller hergestellt werden. In dem Bereich 10 ist eine der letzten Fertigungsstufen bei der Banknotenherstellung skizziert, wobei Papierbögen 12, welche aus bereits bedruckten, aber noch nicht durch Schnitt getrennten Banknoten 1 bestehen, auf einer Förderstraße 14 in Richtung zu einer (nicht gezeigten) Schneidemaschine bewegt werden. An der Förderstraße 14 ist eine automatische Bildaufnahmeeinrichtung, vorzugsweise Scannereinrichtung 16 vorgesehen, welche dazu eingerichtet ist, die auf der Förderstraße 14 intermittierend in Richtung des Pfeils 15 bewegten Banknoten-Papierbögen 12 bereichsweise beidseitig optisch zu scannen, um von jeder Banknote 1 ein Bild zu erfassen. Die korrekte Positionierung der Banknoten 1 relativ zu dem Scanner 16 erfolgt vermittels der Steuerung der Antriebsmittel der Förderstraße 14 automatisch, so dass jede Banknote 1, die die Scannereinrichtung 16 auf dem Weg längs der Förderstraße 14 passiert, optisch erfasst wird. Da bei der optischen Erfassung auch ein Bild der Verteilung der fluoreszierenden Fasern 2 aufgenommen werden soll, erfolgt der jeweilige Scanvorgang unter den Bedingungen der Fluoreszenz dieser Fasern 2, wobei die Fluoreszenzanregung durch Bestrahlen mittels einer UV-Lichtquelle (nicht gezeigt) erfolgt. Bei der Bildaufnahme jeder Banknote wird auch die Seriennummer 5 erfasst, die vorzugsweise als fluoreszierende Markierung sichtbar zu machen ist. Die von der Scannereinrichtung 16 aufgenommenen Bilddaten werden von einer Datenverarbeitungsanlage 18 übernommen, die nach einem Datenkomprimierungsprogramm die Bilddaten komprimiert und in der komprimierten Form in einer Archivdatenbank 21 des Archivspeichers 20 speichert. Die den einzelnen Banknoten 1 zugeordneten Bilddaten werden dabei in Zuordnung zu den jeweiligen Seriennummern 5 in der Archivdatenbank 21 abgespeichert. Die Banknoten 1 werden nach ihrer Fertigstellung von einer dazu autorisierten Stelle in Umlauf gebracht.

Die Archivdatenbank 21 wird von einer autorisierten Stelle, z.B. von dem Hersteller der Banknoten 1, unter Verschluss gehalten. Sie steht jedoch für

Vergleichsanfragen betreffend die Authentizität in Umlauf befindlicher Banknoten zur Verfügung.

Die Echtheitsprüfung einer Banknote 1 unter Verwendung der Archivdatenbank kann auf folgende Weise geschehen. Die zu prüfende Banknote 1 wird einem Prüfgerät 22 zugeführt, welches eine Bildaufnahmeeinrichtung 24 zur Aufnahme von Bilddaten der jeweils zu prüfenden Banknote aufweist. Die Bildaufnahmeeinrichtung 24 kann z.B. einen optischen Scanner oder eine Digitalkamera enthalten. Die Bildaufnahme erfolgt im Beispielsfall bei UV-Belichtung, um Fluoreszenzbedingungen für die zu prüfende Banknote zu schaffen.

Die bei der Bildaufnahme einer zu prüfenden Banknote erhaltenen Bilddaten können dann zum Zwecke einer Vergleichsanfrage über eine Datenfernübertragungsverbindung an die Datenverarbeitungseinrichtung 18 in dem geschützten Bereich 10 übertragen werden. Die Datenverarbeitungseinrichtung 18 greift dann nach Maßgabe der Seriennummer 5 der zu prüfenden Banknote auf die Archivdatenbank 21 zu, um die in der Archivdatenbank 21 zu der Seriennummmer gespeicherten Bilddaten mit den empfangenen Bilddaten zu vergleichen. Ergibt dieser Vergleich eine Übereinstimmung im Rahmen einer bestimmten Fehlertoleranz, so sendet die Datenverarbeitungseinrichtung 18 eine Rückmeldung an das betreffende Prüfgerät 22, um die Echtheit der geprüften Banknote 1 zu bestätigen. Andernfalls erfolgt eine Rückmeldung von der Datenverarbeitungseinrichtung 18 an das Prüfgerät 22 mit der Information, dass die Authentizität der geprüften Banknote nicht bestätigt wird.

Die dezentralen Prüfgeräte 22 können beispielsweise in Kassenautomaten/ Geldautomaten oder dgl. integriert sein.

Bisher wurde unter Bezugnahme auf Fig. 2 vorausgesetzt, dass die Archivdatenbank 21 von autorisierter Stelle in dem geschützten Bereich unter

Verschluss gehalten wird und dass lediglich Ergebnisse von Vergleichsanfragen von der Datenverarbeitungseinrichtung 18 an die jeweilige anfragende Einrichtung 22 übermittelt wird.

Gemäß einer Variante des Authentizitätssicherungsverfahrens nach der Erfindung kann es vorgesehen sein, dass Kopien der Archivdatenbank 21 erstellt und an dezentrale Authentifizierungsstellen übermittelt werden. Diese dezentralen Authentifizierungsstellen können dann ebenfalls Vergleichsanfragen bearbeiten.

Gemäß einer weiteren Variante des Authentizitätssicherungssystems nach der Erfindung ermittelt die Datenverarbeitungseinrichtung 18 einen Prüfcodewert für jede einzelne Banknote 1 auf der Basis der ursprünglich mittels der Bildaufnahmeeinrichtung erfassten Bilddaten. Die Berechnung des Prüfcodewertes erfolgt nach einem geschützten Algorithmus, der auf die jeweiligen Bilddaten der Banknoten 1 angewandt wird. Da sich die Banknoten auf Grund der zufälligen Verteilung der fluoreszierenden Sicherheitsfasern 2 im Substrat unterscheiden und diese Unterschiede in den Bilddaten zum Ausdruck kommen, führt der Prüfcode-Berechnungsalgorithmus zu unterschiedlichen Prüfcodewerten für die einzelnen Banknoten 1.

In Fig. 2 ist mit gestrichelten Linien ein der vorliegend besprochenen Variante des Authentizitätssicherungssystems zugeordnetes Druckwerk 28 angedeutet, welches der Bildaufnahmeeinrichtung 16 nachgeschaltet und dazu eingerichtet ist, auf die Banknoten 1 die jeweils mittels der Datenverarbeitungseinrichtung 18 ermittelten Prüfcodewerte aufzudrucken, und zwar vorzugsweise mittels einer fluoreszierenden oder photochromen Druckfarbe. Die so präparierten Banknoten 1 können dann nach Fertigstellung in Umlauf gebracht werden.

Zu einer nur auf dem Prüfcodewert basierenden Prüfung einer solchen Banknote ist abweichend zu der oben unter Bezugnahme auf Fig. 2 beschriebenen Situation kein Datenaustausch zwischen Prüfgerät 22 und der Archivdatenbankverwaltung 18 erforderlich. Die Prüfgeräte 22 enthalten einen Rechner bzw. kommunizieren mit einem Rechner, der aus den Bilddaten, die mittels der Bildaufnahmeeinrichtung 24 bei der Prüfung einer Banknote 1 erfasst wurden, einen Prüfcodewert berechnet. Der bei der Prüfung berechnete Prüfcodewert der Banknote 1 wird dann vom Prüfgerät 22 mit dem auf der Banknote 1 aufgedruckten Prüfcodewert verglichen. Bei Übereinstimmung des aufgedruckten Prüfcodewertes 7 mit dem bei der Prüfung dezentral berechneten Prüfcodewert bestätigt das Prüfgerät 22 die Echtheit der Banknote 1. Wird keine Übereinstimmung der Prüfcodewerte 7 festgestellt, so wird dies als Hinweis darauf gewertet, dass die geprüfte Banknote 1 gefälscht ist.

Die Bilddatenerfassung oder/und Bilddatenauswertung für die ursprüngliche Archivierung oder/und bei der späteren Prüfung von Dokumenten kann auf eine oder ggf. mehrere Teilflächen des Dokumentes bezogen sein. Die Position einer solchen Teilfläche auf den Dokumenten kann der Geheimhaltung unterliegen, so dass nur autorisierte Stellen und insbesondere die Authentifizierungsstelle davon Kenntnis haben. Insbesondere kann es vorgesehen sein, dass die für eine Prüfung eines Dokumentes zu betrachtende Teilfläche für einen jeweiligen Prüfvorgang von der Authentifizierungsstelle aktuell bestimmt und erst bei Einleitung des Prüfvorganges der zu prüfenden Stelle bzw. dem Prüfgerät per Datenübertragung mitgeteilt wird. Sollte eine Authentisierung wegen z. B. starker Verschmutzung der Teilfläche nicht möglich sein, kann von der Authentifizierungsstelle ein Datensatz zu einer anderen Teilfläche per Datenfernübertragung angefordert werden, bevor das Dokument vom Prüfgerät als nicht authentifizierbar zurückgewiesen, eingezogen oder vernichtet wird. Die Beschränkung der Prüfung auf Teilflächen begrenzt die zu erfassende, zu übertragende und zu prüfende Datenmenge auf einen vergleichsweise kleinen Wert.

Die Bilddatenerfassung oder/und Bilddatenauswertung kann ferner spektralselektiv erfolgen. Hierzu kann es vorgesehen sein, dass verschiedenfarbig fluoreszierende Partikel bzw. Fasern im Substrat verteilt sind. Die bei der Auswertung berücksichtigten Spektralbereiche könnten ebenfalls geheimgehalten und ggf. von Prüfvorgang zu Prüfvorgang geändert werden.

Das erfindungsgemäße Verfahren ist dadurch gekennzeichnet, dass bei einem jeweiligen Prüfvorgang eine von der Authentifizierungsstelle veranlasste und dokumentierte spezifische Änderung des Dokumentes vorgenommen wird. Beim nächsten Prüfvorgang erwartet die Authentifizierungsstelle das Vorhandensein des geänderten Merkmals, um das Dokument als echt zu qualifizieren. Die Änderung des Dokumentes entspricht der Hinzufügung oder Variation eines Merkmals, das den Authentifizierungsvorgang dokumentiert. Die Möglichkeiten einer spezifischen Änderung eines Dokumentes in dem vorstehend erläuterten Sinne sind vielfältig. So können beispielsweise mit einem Laser einzelne Substratmerkmale irreversibel geändert werden. Im einfachsten Fall kann ein kleiner Brandfleck auf dem Dokument oder ein kleines Loch in dem Dokument mittels Laserstrahlung erzeugt werden. Weiter kann z.B. mit einem Drucker, etwa einem Thermosublimationsdrucker, eine kleine Stelle auf dem Dokument mit Farbe oder Metalldampf bedruckt werden. Ist das Dokument mit Fluoreszenzfarbstoffen bedruckt, so kann man diese mit intensivem Laserlicht irreversibel bleichen, um die gezielte Änderung herbeizuführen.

Sofern Dokumente mit Speicherchips oder ggf. Magnetstreifen usw. versehen sind, kann eine solche spezifische Änderung auch darin bestehen, dass ein Prüfcode in dem Speicherchip bzw. Magnetstreifen gespeichert wird, dessen Vorhandensein bei einer nächsten Prüfung des Dokumentes zu den Voraussetzungen für eine Authentifizierung gehört.

Die bei jeder Prüfung eines Dokumentes vorgenommene spezifische Änderung des Dokumentes und die Überprüfung des Vorhandenseins des geänderten Merkmals bei einem nächsten Prüfvorgang des Dokumentes liefern ein sehr hohes Maß an Fälschungssicherheit. Selbst wenn es Fälschern gelingen sollte, exakte Kopien eines herausgegebenen Dokumentes anzufertigen, so kann höchstens ein Exemplar dieser Kopien den Authentizitätsprüfungsvorgang täuschen, da ja das erste geprüfte Exemplar nach der Prüfung das geänderte bzw. hinzugefügte Merkmal aufweist und die Authentifizierungsstelle bei einer nächsten Anfrage dieses geänderte Merkmal bei dem betreffenden Dokument erwartet, um die Echtheit zu bestätigen.

In den Figuren 3a und 3b ist ein Dokument der in Fig. 1 gezeigten Art vor (Fig. 3a) und nach (Fig. 3b) einem Prüfungsvorgang mit spezifischer Änderung des Dokumentes dargestellt. Das Dokument 1 weist ein Authentifizierungsänderungsfeld in Form einer Pixelmatrix 8 auf. Bei einer Prüfung des Dokumentes 1 in Fig. 3a mit einem Prüfgerät 22 gemäß Fig. 2 sind die Pixel P1 und P2 geändert worden, so dass das Dokument 1 dadurch eine neue Identität mit den Merkmalen der Fig. 3b erhalten hat. Die Pixeländerung wurde durch irreversible Änderung eines auf dem Feld 8 aufgetragenen Farbstoffes an den betreffenden Stellen P1 und P2 mittels Laserstrahlung eines in dem betreffenden Prüfgerät 22 integrierten Lasers 26 herbeigeführt, beispielsweise durch Ausbleichen eines Fluoreszenzfarbstoffes. Die Information, an welchen konkreten Stellen des Authentifizierungsänderungsfeldes 8 Pixeländerungen hervorgerufen werden sollen, sind dem Prüfgerät 22 bzw. der darin integrierten Steuereinheit des Lasers 26 im Verlaufe des betreffenden Prüfvorganges vermittels bidirektionaler Datenübertragung zwischen Prüfgerät 22 und Authentifizierungsstelle 10 übermittelt worden. In der Archivierungsdatenbank 21 der Authentifizierungsstelle 10 wird die Änderung des Dokumentes 1 vermerkt, um sie im Falle einer späteren Prüfung desselben Dokumentes 1 als Echtheitskriterium berücksichtigen zu können.

## Patentansprüche

1. Verfahren zur Authentizitätssicherung von Dokumenten, die jeweils ein Substrat mit für jedes einzelne Dokument individuellen Substratmerkmalen (2) aufweisen und mit Dokumentendaten versehen sind, wobei ein jeweiliges Dokument vor seiner Herausgabe insgesamt oder teilweise ortsaufgelöst analysiert - und dabei ein Datensatz mit Informationen über die Anordnung oder/und Ausprägung individueller Substratmerkmale des Dokumentes erzeugt wird, wobei die Daten dieses Datensatzes oder daraus abgeleitete Daten zusammen mit oder in Zuordnung zu Dokumentendaten des betreffenden Dokumentes in einer Datenbank gespeichert werden, um sie für spätere Authentifizlerurgsanfragen bereitzuhalten, **dadurch gekennzeichnet, dass** bei jeder Authentizitätsprüfung eines herausgegebenen Dokumentes eine spezifische Änderung eines Merkmals des Dokumentes vorgenommen wird, wobei zur Authentifizierung des Dokumentes bei einer nächsten Authentizitätsprüfung das Vorhandensein des geänderten Merkmals Voraussetzung ist.

2. Verfahren zur Authentizitätssicherung nach Anspruch 1, wobei die ortsaufgelöste Analyse optisch unter Anwendung eines Bilddaten erzeugenden Verfahrens, insbesondere durch einseitiges oder beidseitiges Scannen des Dokumentes durchgeführt wird.

3. Verfahren zur Authentizitätssicherung nach Anspruch 1, wobei die individuellen Substratmerkmale durch stochastisch oder quasi-stochastisch verteilte, optisch markante Partikel (2), insbesondere Fasern gebildet sind.

4. Verfahren zur Authentizitätssicherung nach Anspruch 3, wobei die optisch markanten Partikel (2) in die Substratmasse einbezogen sind.

5. Verfahren zur Authentizitätssicherung nach Anspruch 3, wobei die optisch markanten Partikel (2) an der Substratoberfläche haften.

6. Verfahren nach Anspruch 5, wobei die optisch markanten Partikel als Beimengungen zu einer Druckfarbe oder Tinte auf die Substratoberfläche aufgebracht worden sind.

7. Verfahren zur Authentizitätssicherung von Dokumenten nach einem der vorhergehenden Ansprüche, wobei die optisch markanten Partikel (2) spezifische optische Eigenschaften, insbesondere fluoreszierende, phosphoreszierende, photochrome, polarisationssensitiveoder vom Betrachtungswinkel abhängige optische Eigenschaften haben, und wobei die ortsaufgelöste optische Analyse des betreffenden Dokumentes unter Ausnutzung der spezifischen optischen Eigenschaften der Partikel (2) durchgeführt wird.

8. Verfahren zur Authentizitätssicherung von Dokumenten nach einem der vorhergehenden Ansprüche, wobei zumindest einige Substratmerkmale oder/und Dokumentendatenmerkmale ein photochromes Material, insbesondere ein Bakteriorhodopsin oder mehrere Bakteriorhodopsine enthalten, die unterschiedliche optische Eigenschaften aufweisen.

9. Verfahren zur Authentizitätssicherung nach einem der vorhergehenden Ansprüche, wobei die Dokumentendaten das betreffende Dokument individualisierende Daten, insbesondere Seriennummer-Daten, umfassen.

10. Verfahren zur Authentizitätssicherung nach einem der vorhergehenden Ansprüche, wobei die Dokumentendaten Informationen über den Dokumentenhersteller oder/und über eine zur Authentifizierung berechtigte Stelle oder/und über die Authentifizierungsmöglichkeit oder/und zur Identifizierung des Dokumenteneigentümers oder/und über den Verwendungszweck des Dokumentes oder/und über den Wert des Dokumentes umfassen.

11. Verfahren zur Authentizitätssicherung nach einem der vorhergehenden Ansprüche, wobei Dokumentendaten auf dem Substrat in Form von grafischen Darstellungen wie Buchstaben oder Zahlen vorgesehen sind.

12. Verfahren zur Authentizitätssicherung nach einem der vorhergehenden Ansprüche, wobei Dokumentendaten in einem Speicherchip oder/und auf einem Magnetstreifen des Dokumentes gespeichert sind.

13. Verfahren zur Authentizitätssicherung nach einem der vorhergehenden Ansprüche, wobei zumindest auf einen Teil der Bilddaten eines jeweiligen Dokumentes oder auf daraus abgeleitete Daten ein Algorithmus zur Berechnung wenigstens eines dem jeweiligen Dokumentenexemplar zugeordneten Prüfcodewertes angewendet und das Dokumentenexemplar mit einer den Prüfcodewert repräsentierenden Markierung versehen wird.

## Claims

1. A method for guaranteeing the authenticity of documents which each have a substrate with substrate features (2) specific to each individual document and are provided with document data, wherein a respective document, before being issued, is analysed wholly or partly in a spatially resolved manner, whereupon a data record with information about the arrangement and/or instance of specific individual substrate features of the document is generated, wherein the data of said data record or data derived therefrom are stored in a database together with or in association with document data of the relevant document in order to keep them ready for subsequent authentication requests, **characterised in that** for each authenticity check of an issued document a specific change in one feature of the document is carried out, wherein the presence of the changed feature is a prerequisite for authentication of the document during the next authenticity check.

2. A method for guaranteeing authenticity according to Claim 1, wherein the spatially resolved analysis is carried out optically using a method which generates image data, in particular by single-sided or two-sided scanning of the document.

3. A method for guaranteeing authenticity according to Claim 1, wherein the individual substrate features are formed by randomly or quasi-randomly distributed, optically prominent particles (2), in particular fibres.

4. A method for guaranteeing authenticity according to Claim 3, wherein the optically prominent particles (2) are incorporated in the substrate mass.

5. A method for guaranteeing authenticity according to Claim 3, wherein the optically prominent particles (2) adhere to the substrate surface.

6. A method according to Claim 5, wherein the optically prominent particles have been applied to the substrate surface as additives to a printing ink or ink.

7. A method for guaranteeing the authenticity of documents according to any one of the preceding Claims, wherein the optically prominent particles (2) have specific optical properties, in particular fluorescent, phosphorescent, photochromic, polarisation-sensitive or viewing angle-dependent optical properties, and wherein the spatially resolved optical analysis of the relevant document is carried out utilising the specific optical properties of the particles (2).

8. A method for guaranteeing the authenticity of documents according to any one of the preceding Claims, wherein at least some substrate features and/or document data features contain photochromic material, in particular a bacteriorhodopsin or a plurality of bacteriorhodopsins which have different optical properties.

9. A method for guaranteeing authenticity according to any one of the preceding Claims, wherein the document data comprise data which individualise the relevant document, in particular serial number data.

10. A method for guaranteeing authenticity according to any one of the preceding Claims, wherein the document data comprise information about the document manufacturer and/or about a site authorised for authentication and/or about the authentication potential and/or for identification of the document owner and/or about the intended use of the document and/or about the value of the document.

11. A method for guaranteeing authenticity according to any one of the preceding Claims, wherein document data are provided on the substrate in the form of graphical representations, such as letters or numerals.

12. A method for guaranteeing authenticity according to any one of the preceding Claims, wherein document data are stored in a memory chip and/or on a magnetic strip of the document.

13. A method for guaranteeing authenticity according to any one of the preceding Claims, wherein an algorithm for calculating at least one verification code value allocated to the respective document specimen is applied at least to one part of the image data of a respective document or to data derived therefrom, and the document specimen is provided with a marking which represents the verification code value.

## Revendications

1. Procédé pour protéger l'authenticité de documents qui comportent un substrat ayant des caractéristiques de substrat (2) individuelles pour chaque document particulier et qui sont dotés de données de document, chaque document étant soumis avant son édition à une analyse déclenchée sur place, intégrale ou partielle - et ce faisant il est généré un bloc de données avec des informations sur l'agencement ou/et la forme des caractéristiques de substrat individuelles du document, les données de ce bloc de données ou les données déduites de ce bloc de données étant mémorisées conjointement ou en association avec des données de document du document concerné dans une banque de données, afin de les tenir à disposition pour des demandes ultérieures d'authentification, **caractérisé en ce que**, lors de chaque vérification d'authenticité d'un document édité, il est réalisé une modification spécifique d'une caractéristique du document, la présence de la caractéristique modifiée étant une condition préalable pour l'authentification du document lors d'une prochaine vérification d'authenticité.

2. Procédé pour protéger l'authenticité selon la revendication 1, **caractérisé en ce que** l'analyse déclenchée sur place est exécutée de manière optique en employant un procédé générant des données d'image, en particulier par la numérisation d'une face ou des deux faces du document.

3. Procédé pour protéger l'authenticité selon la revendication 1, **caractérisé en ce que** les caractéristiques de substrat individuelles sont formées par des particules (2) optiquement marquantes, en particulier des fibres, réparties de manière stochastiques ou quasi-stochastiques.

4. Procédé pour protéger l'authenticité selon la revendication 3, **caractérisé en ce que** les particules (2) optiquement marquantes sont intégrées dans la masse du substrat.

5. Procédé pour protéger l'authenticité selon la revendication 3, **caractérisé en ce que** les particules (2) optiquement marquantes adhèrent à la surface du substrat.

6. Procédé selon la revendication 5, **caractérisé en ce que** les particules optiquement marquantes ont été déposées sur la surface du substrat en tant qu'additifs à une encre d'imprimerie ou une encre.

7. Procédé pour protéger l'authenticité de documents selon l'une quelconque des revendications précédentes, **caractérisé en ce que** les particules optiquement marquantes (2) ont des propriétés optiques spécifiques, en particulier fluorescentes, phosphorescentes, photochromes, sensibles à la polarisation ou des propriétés optiques dépendantes de l'angle d'observation, et **en ce que** l'analyse optique déclenchée sur place du document concerné est exécutée en tirant profit des propriétés optiques spécifiques des particules (2).

8. Procédé pour protéger l'authenticité de documents selon l'une quelconque des revendications précédentes, **caractérisé en ce qu'**au moins quelques caractéristiques de substrat ou/et caractéristiques de données de document contiennent un matériel photochrome, en particulier une bactériorhodopsine ou plusieurs bactériorhodopsines qui présentent des propriétés optiques différentes.

9. Procédé pour protéger l'authenticité selon l'une quelconque des revendications précédentes, **caractérisé en ce que** les données de document comportent des données individualisant le document concerné, en particulier des données de numéro de série.

10. Procédé pour protéger l'authenticité selon l'une quelconque des revendications précédentes, **caractérisé en ce que** les données de document contiennent des informations sur le fabricant du document ou/et sur une position autorisée pour l'authentification ou/et sur la possibilité d'authentification ou/et sur l'identification du propriétaire du document ou/et sur l'emploi prévu du document ou/et sur la valeur du document.

11. Procédé pour protéger l'authenticité selon l'une quelconque des revendications précédentes, **caractérisé en ce que** des données de document sont prévues sur le substrat sous forme de représentations graphiques, telles que des lettres ou des chiffres.

12. Procédé pour protéger l'authenticité selon l'une quelconque des revendications précédentes, **caractérisé en ce que** les données de document sont enregistrées dans une puce mémoire ou/et sur une bande magnétique du document.

13. Procédé pour protéger l'authenticité selon l'une quelconque des revendications précédentes, **caractérisé en ce qu'**un algorithme est appliqué au moins sur une partie des données d'image d'un document particulier ou sur des données déduites de celles-ci afin de calculer au moins une valeur de code de vérification associée à l'exemplaire de document particulier et **en ce que** l'exemplaire de document est pourvu d'un marquage représentant la valeur de code de vérification.
